# EUROPEAN PATENT SPECIFICATION

(11) **EP 4 292 883 B1**
(45) Date of publication and mention of the grant of the patent: **20.11.2024**
(21) Application number: 22752687.8
(22) Date of filing: 03.02.2022
(51) Int. Cl.: B60Q 1/14, F21S 41/153, F21S 41/143, F21S 41/151, F21S 41/663, F21W 102/13, F21W 102/145, F21W 102/19

(54) **VEHICLE HEADLIGHT**
SCHEINWERFER FÜR FAHRZEUGE
PHARE DE VÉHICULE

(30) Priority: 15.02.2021 JP 2021021926
(43) Date of publication of application: 20.12.2023
(73) Proprietor: KOITO MANUFACTURING CO., LTD., Minato-ku Tokyo 108-8711 (JP)
(72) Inventor: ISHIHARA, Koji, Shizuoka-shi, Shizuoka 424-8764 (JP); SUGIMOTO, Atsushi, Shizuoka-shi, Shizuoka 424-8764 (JP)
(74) Representative: Hoffmann Eitle
(86) International application number: PCT/JP2022/004320
(87) International publication number: WO 2022/172860

(56) References cited:
- EP-A1- 2 979 923
- EP-A1- 3 050 750
- EP-A1- 3 671 015
- EP-B1- 3 246 204
- WO-A1-2021/018657
- JP-A- 2016 159 709
- JP-A- 2019 137 324
- JP-A- 2020 055 516
- JP-A- 2020 075 714

## Description

### Technical Field

The present invention relates to vehicle headlights.

### Background Art

As a vehicle headlight, for example, the vehicle headlight disclosed in JP 2020-131922 A is known. The vehicle headlight disclosed in JP 2020-131922 A is equipped with an LED array including a plurality of LEDs, and forms a light distribution pattern that can be changed by light beams emitted from the LED array. In addition, in the vehicle headlight disclosed in JP 2020-131922 A, in a case where another vehicle is present in front of the vehicle, among the plurality of LEDs forming the LED array, LEDs that irradiate the other vehicle and a surrounding region thereof are turned off to perform so-called ADB (Adaptive Driving Beam) control. With the vehicle headlight disclosed in JP 2020-131922 A, by performing ADB control in this manner, a region overlapping another vehicle and a region surrounding the region in the prescribed light distribution pattern are made darker than other regions, and thus dazzling of another vehicle can be suppressed.

WO 2021/018657 A1 discloses a method for controlling a lighting device for a motor vehicle comprising at least first and second light modules (3, 4) arranged to emit, respectively, first and second pixelated light beams (HD, LD) in first and second predetermined emission zones (ZHD, ZLD) which are associated with them, the resolution of the first pixelated light beam being greater than the resolution of the second pixelated light beam and the first and second predetermined emission zones being adjacent. EP 2979923 A1, EP 3671015 A, and JP 2020 055516 A each disclose vehicle lights having specific illumination patterns.

### Summary of Invention

However, when there is a collision of a vehicle in which the vehicle headlight disclosed in JP 2020-131922 is mounted, an undimmed region suddenly overlaps another vehicle, and dazzling of the other vehicle may occur. For this reason, there is a demand to further suppress dazzling of another vehicle when performing ADB control.

Therefore, an object of the present invention is to provide a vehicle headlight capable of suppressing dazzling of another vehicle when performing ADB control.

In order to achieve the above object, a vehicle headlight of the present invention is equipped with: a light source unit for forming a light distribution pattern which can be changed by light beams emitted from a light source group; and a control unit, wherein, in a case where a detection signal of another vehicle present in front of an ego-vehicle is inputted from a detection unit for detecting the other vehicle, the control unit causes first light sources of the light source group, which emit light toward a first region including a region overlapping a visual recognition part of the other vehicle used by a driver thereof to visually recognize the outside of the other vehicle, to emit light having a lower intensity than in a case where no detection signal is inputted, and causes second light sources, among second light sources of the light source group that emit light toward a second region surrounding the first region, which emit light toward a lower-side region lower than the first region, to emit light with an increasingly lower intensity toward the side closer to the first region.

The visual recognition part is, in a case where the other vehicle is a preceding vehicle, the rear windshield and a door mirror of the preceding vehicle, and is, in a case where the other vehicle is an oncoming vehicle, the front windshield of the oncoming vehicle. With this vehicle headlight, because the intensity of the light emitted from the first light source is lower than in a case where no detection signal of the other vehicle is inputted, the first region overlapping the visual recognition part of the other vehicle becomes darker than in the case where no detection signal of the other vehicle is inputted. Therefore, by darkening the first region as described above, it is possible to suppress dazzling of another vehicle when performing ADB control.

In addition, in this vehicle headlight, the control unit causes second light sources, which emit light toward a lower-side region of a second region located lower than the first region, to emit light with an increasingly lower intensity toward the side closer to the first region. Therefore, in this vehicle headlight, gradation in which the intensity of light decreases toward the first region is formed in the second region located below the first region. In this way, the lower-side region in the second region becomes darker toward the first region. Therefore, for example, even in a case where the lower-side region of the second region overlaps the visual recognition part of another vehicle due to the ego-vehicle colliding and tilting upward, this gradation is interposed, and therefore the visual recognition part of another vehicle is prevented from being suddenly brightly irradiated. Therefore, with this vehicle headlight, it is possible to suppress dazzling of another vehicle more effectively when performing ADB control.

In a case where the ego-vehicle is tilted such that the front side of the ego-vehicle is higher than the rear side, the control unit increases the width of the lower-side region in the up-down direction as the tilt of the ego-vehicle increases.

In this way, in a case where the second region moves upward and overlaps the visual recognition part of another vehicle, the lower-side region where the gradation is formed can easily overlap the visual recognition part of the other vehicle. For this reason, it is possible to suppress dazzling of another vehicle more effectively when performing ADB control.

Preferably, in a case where the detection signal is inputted from the detection unit, the control unit preferably causes, among the second light sources, the second light sources which emit light toward an upper-side region above the first region to emit light with an increasingly lower intensity toward the side closer to the first region.

With such a configuration, gradation in which the light intensity decreases toward the first region is formed in the second region located above the first region. In this way, the upper-side region in the second region becomes darker toward the first region. Therefore, for example, even in a case where the upper-side region of the second region overlaps the visual recognition part of another vehicle due to the ego-vehicle colliding and tilting downward, this gradation is interposed, and therefore the visual recognition part of another vehicle is prevented from being suddenly brightly irradiated. Thus, it is possible to suppress dazzling of another vehicle more effectively when performing ADB control.

Further, in a case where the ego-vehicle is tilted such that the rear side of the ego-vehicle is higher than the front side, the control unit may increase the width of the upper-side region in the up-down direction as the tilt of the ego-vehicle increases.

In this way, in a case where the second region moves downward and overlaps the visual recognition part of another vehicle, the upper-side region where the gradation is formed is more likely to overlap the visual recognition part of another vehicle. For this reason, it is possible to suppress dazzling of another vehicle more effectively when performing ADB control.

In addition, in a case where the detection signal is inputted from the detection unit, the control unit causes at least one second light source of: a second light source that emits light toward a left-side region on a left side of the first region among the second light sources, and a second light source that emits light toward a right-side region on a right side of the first region among the second light sources, to emit light with an increasingly lower intensity toward the side closer to the first region.

Note that, in the present specification, left and right means left and right when the direction of travel of the ego-vehicle is used as a reference, unless otherwise specified.

With such a configuration, gradation in which the light intensity decreases toward the first region is formed in the second region located on the left side of the first region. In this case, the left-side region becomes darker toward the first region. Further, with such a configuration, gradation in which the light intensity decreases toward the first region is formed in the second region located on the right side of the first region. In this case, the right-side region becomes darker toward the first region. Therefore, even in a case where at least one of the left-side and right-side regions of the second region overlaps the visual recognition part of the other vehicle due to a change in the relative position between the ego-vehicle and the other vehicle in the left-right direction, this gradation is interposed, and therefore the visual recognition part of another vehicle is prevented from being suddenly brightly irradiated. Thus, it is possible to suppress dazzling of another vehicle more effectively when performing ADB control.

In addition, at least one of a width in the left-right direction of the left-side region and a width in the left-right direction of the right-side region is preferably smaller than a width in the up-down direction of the lower side region.

In a case where at least one of the width in the left-right direction of the left-side region and the width in the left-right direction of the right-side region is smaller than the width in the up-down direction of the lower-side region, it is possible to widen the region where gradation is not formed in the second region in comparison with a case where both the width in the left-right direction of the left-side region and the width in the left-right direction of the right-side region are equal to or greater than the width in the up-down direction of the lower-side region. Because the region where the gradation is not formed is located on the side opposite to the first region side of a left-side region and a right-side region, respectively, this region is substantially brighter than the left-side region and the right-side region. Therefore, because the region in which the gradation is not formed in the second region is widened, the front of the ego-vehicle can be brightened, and the visibility when performing ADB control can be improved.

In addition, a ratio of a width in the left-right direction of the left-side region to a width in the left-right direction of the first region in a case where the other vehicle is an oncoming vehicle may be greater than a ratio of a width in the left-right direction of the left-side region to a width in the left-right direction of the first region in a case where the other vehicle is a preceding vehicle.

The oncoming vehicle approaches more rapidly than the preceding vehicle. For this reason, the relative position in the left-right direction between the ego-vehicle and the oncoming vehicle is easily shifted to the left in comparison with the relative position in the left-right direction between the ego-vehicle and the preceding vehicle. Therefore, as described above, in a case where the other vehicle is an oncoming vehicle, the ratio of the width in the left-right direction of the left-side region to the width in the left-right direction of the first region is made greater than the ratio of the width in the left-right direction of the left-side region to the width in the left-right direction of the first region in a case where the other vehicle is a preceding vehicle. In this case, the width in the left-right direction of the left-side region in a case where the other vehicle is an oncoming vehicle can be increased in comparison with a case where the ratio of the width is equal to or less than the ratio of the left-side region to the first region in a case where the other vehicle is a preceding vehicle. For this reason, even in a case where an oncoming vehicle rapidly approaches the ego-vehicle and where the left-side region of the second region overlaps the visual recognition part of the oncoming vehicle, the visual recognition part of the approaching oncoming vehicle can be prevented from being suddenly brightly irradiated by interposing the left-side region where gradation is formed. Therefore, dazzling of the oncoming vehicle can be effectively suppressed.

In a case where the other vehicle is an oncoming vehicle, the ratio of the width in the left-right direction of the right-side region to the width in the left-right direction of the first region may be greater than the ratio of the width in the left-right direction of the right-side region to the width in the left-right direction of the first region in a case where the other vehicle is a preceding vehicle.

As described above, because the oncoming vehicle approaches rapidly in comparison with a preceding vehicle, the relative position in the left-right direction between the ego-vehicle and the oncoming vehicle is easily shifted to the right in comparison with the relative position in the left-right direction between the ego-vehicle and the preceding vehicle. Therefore, as described above, in a case where the other vehicle is an oncoming vehicle, the ratio of the width in the left-right direction of the right-side region to the width in the left-right direction of the first region is made greater than the ratio of the width in the left-right direction of the right-side region to the width in the left-right direction of the first region in a case where the other vehicle is a preceding vehicle. In this case, in comparison with a case where the ratio of the width is equal to or less than the ratio of the right-side region to the first region in a case where the other vehicle is a preceding vehicle, the width of the right-side region in the left-right direction in a case where the other vehicle is an oncoming vehicle can be increased. For this reason, even in a case where an oncoming vehicle rapidly approaches the ego-vehicle and where the right-side region of the second region overlaps the visual recognition part of the oncoming vehicle, the visual recognition part of the approaching oncoming vehicle can be prevented from being suddenly brightly irradiated by interposing the right-side region where gradation is formed. Thus, it is possible to suppress dazzling of an oncoming vehicle effectively when performing ADB control.

Further, a width in the left-right direction in a third region, which is a region farther from the ego-vehicle in the left-side region and the right-side region in a case where the other vehicle is an oncoming vehicle, may be greater than a width in the left-right direction in a fourth region, which is a region closer to the ego-vehicle in the left-side region and the right-side region in a case where the other vehicle is an oncoming vehicle.

When an oncoming vehicle is approaching, a region overlapping the oncoming vehicle in the light distribution pattern rapidly spreads to the side farther from the ego-vehicle than the side closer to the ego-vehicle. Therefore, in a case where the other vehicle is an oncoming vehicle, the side farther from the ego-vehicle in the left-side and right-side regions of the second region is more likely to overlap the oncoming vehicle than the side closer to the ego-vehicle in the left-side and right-side regions of the second region. Therefore, as described above, the width in the left-right direction in the third region is made greater than the width in the left-right direction in the fourth region. In this way, even in a case where an oncoming vehicle approaches and where a region overlapping the visual recognition part of the oncoming vehicle in the light distribution pattern rapidly spreads to the side farther from the ego-vehicle such that the second region overlaps the visual recognition part of the oncoming vehicle, the visual recognition part of the oncoming vehicle can be prevented from being suddenly brightly irradiated by interposing one of the left-side region and the right-side region where gradation is formed. Thus, it is possible to suppress dazzling of an oncoming vehicle more effectively when performing ADB control.

As described above, according to the present invention, a vehicle headlight that can suppress dazzling of another vehicle when performing ADB control can be provided.

### Brief Description of Drawings

FIG. 1 is a plan view conceptually illustrating a vehicle that is equipped with a vehicle headlight according to an embodiment of the present invention.
FIG. 2 is a side view schematically illustrating one light source unit illustrated in FIG. 1.
FIG. 3 is a front view schematically illustrating a light distribution pattern formation part illustrated in FIG. 2.
FIG. 4 is a view illustrating an example of a light distribution pattern in a case where another vehicle is not present in front of an ego-vehicle.
FIG. 5 is a flowchart illustrating an example of a control flow of a control unit.
FIG. 6 is an enlarged view of part of a light source group.
FIG. 7 is a view illustrating an example of a light distribution pattern in a case where there is a preceding vehicle in front of the ego-vehicle.
FIG. 8 is a view illustrating an example of a light distribution pattern in a case where an oncoming vehicle is present in front of the ego-vehicle.
FIG. 9 is a view illustrating an example of a light distribution pattern in a case where a preceding vehicle and an oncoming vehicle are present in front of the ego-vehicle.

### Description of Embodiments

Hereinafter, embodiments for implementing a vehicle headlight according to the present invention will be illustrated together with the accompanying drawings. The embodiments illustrated below are intended to facilitate understanding of the present invention and are not intended to be construed as limiting the present invention. The present invention can be modified and improved, based on the following embodiments, within the scope of the claims.

Moreover, in the accompanying drawings, the dimensions of each member are sometimes exaggerated to facilitate understanding.

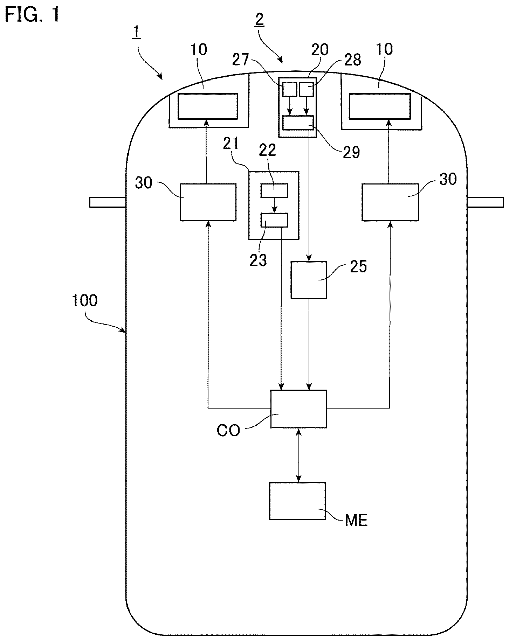

FIG. 1 is a plan view conceptually illustrating an ego-vehicle 100 that is equipped with a vehicle headlight according to an embodiment. As illustrated in FIG. 1, the ego-vehicle 100 is equipped with a vehicle headlight system 2, and the vehicle headlight system 2 includes a vehicle headlight 1, a detection device 20, a tilt calculation device 21, and the like.

First, the vehicle headlight 1 constituting the vehicle headlight system 2 will be described.

The vehicle headlight 1 is mainly equipped with a pair of left and right light source units 10, a control unit CO, a determination unit 25, a pair of power supply circuits 30, and a memory ME.

According to the present embodiment, the pair of light source units 10 have a substantially symmetrical shape in the left-right direction of the ego-vehicle 100, and emit light of a changeable light distribution pattern toward another vehicle located in front of the ego-vehicle 100. Furthermore, the configuration of one light source unit 10 is the same as the configuration of the other light source unit 10 except that the shape is substantially symmetrical. Therefore, one light source unit 10 will be described below, and a description of the other light source unit 10 will be omitted.

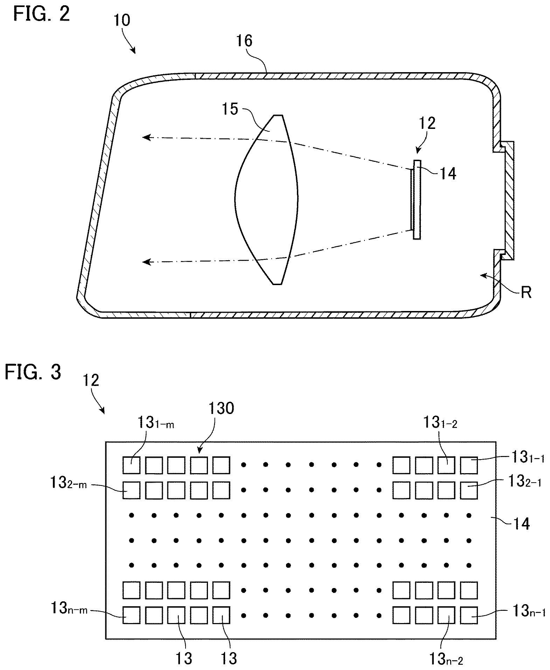

FIG. 2 is a side view schematically illustrating one light source unit 10 illustrated in FIG. 1. As illustrated in FIG. 2, the light source unit 10 is mainly equipped with a light distribution pattern formation unit 12, a projection lens 15, and a housing 16.

Note that light distribution pattern means, for example, a shape of an image projected on a surface arranged 25 meters ahead and an intensity distribution of light in the image.

At least a portion on the front side of the housing 16 has translucency, and the light distribution pattern formation unit 12 and the projection lens 15 are housed in a lamp chamber R formed by the housing 16.

FIG. 3 is a front view schematically illustrating the light distribution pattern formation unit 12 illustrated in FIG. 2, as viewed from the front. As illustrated in FIGS. 2 and 3, the light distribution pattern formation unit 12 according to the present embodiment includes a light source group 130 including a plurality of light sources 13 that emit light, and a circuit board 14 whereon the light source group 130 is mounted. The circuit board 14 is connected to the power supply circuits 30.

As illustrated in FIG. 3, the plurality of light sources 13 are arranged in a matrix, and each of the light sources 13 emits light forward. In the present embodiment, the light sources 13 are LEDs (Light Emitting Diodes), and the light distribution pattern formation unit 12 is configured as a so-called LED array.

Here, when an array of the plurality of light sources 13 along the left-right direction is a row and an array of the plurality of light sources 13 along the up-down direction is a column, according to the present embodiment, the plurality of light sources 13 is provided in an arrangement of n rows × m columns. The first column, which is the rightmost column in FIG. 3, is the leftmost column in a case where the direction of travel is used as a reference, and the mth column, which is the leftmost column in FIG. 3, is the rightmost column in a case where the direction of travel is used as a reference. The first row is the uppermost row, and the nth row is the lowermost row. In FIG. 3, in order to specify the position of the light source 13 in the arrangement as described above, a portion of the light sources 13 is referred to as the light source 13ₙ₋ₘ, or the like, for convenience. For example, the light source 13₁₋₁ is the uppermost light source and is the leftmost light source when the direction of travel is used as a reference; the light source 13₂₋₁ is the second light source from the top and is the leftmost light source when the direction of travel is used as a reference; the light source 13₁₋₂ is the uppermost light source and is the second light source from the left when the direction of travel is used as a reference; and the light source 13ₙ₋ₘ is the lowermost light source and, when the direction of travel is used as a reference, is the rightmost light source.

Note that the arrangement direction of the light sources 13 is not limited to that above. Furthermore, the configuration of the light source unit 10 is not limited to that above. For example, other configurations of the light source units 10 include a configuration including a digital mirror device (DMD) and a light source that irradiates the DMD with light, and a configuration including LCOS (Liquid Crystal on Silicon) in which light is emitted to the LCOS. In the former configuration, the plurality of reflective elements included in the DMD can be considered to correspond to the plurality of light sources in the LED array, and in the latter configuration, the plurality of liquid crystal elements included in the LCOS can be considered to correspond to the plurality of light sources in the LED array.

Such a light distribution pattern formation unit 12 is capable of changing a light distribution pattern formed from light beams emitted from the light source group 130 by causing light to be emitted from some of the light sources 13 of the light source group 130 and turning off the other light sources 13, or providing a difference in the intensity of light emitted from each light source 13.

The projection lens 15 is a lens that adjusts the divergence angle of incident light. The projection lens 15 is disposed in front of the light distribution pattern formation unit 12. When the light beams emitted from the light distribution pattern formation unit 12 are incident on the projection lens 15, a divergence angle of each light beam is adjusted by the projection lens 15. According to the present embodiment, the projection lens 15 is a lens in which the incident surface and the emission surface are formed in a convex shape, and the rear focal point of the projection lens 15 is located on or near the light emission surface of any of the light sources 13 in the light distribution pattern formation unit 12. The divergence angle of the light emitted from the light distribution pattern formation unit 12 is adjusted by the projection lens 15. In this way, the light forming the light distribution pattern is emitted from the light source unit 10 toward the front of the ego-vehicle 100 via the housing 16.

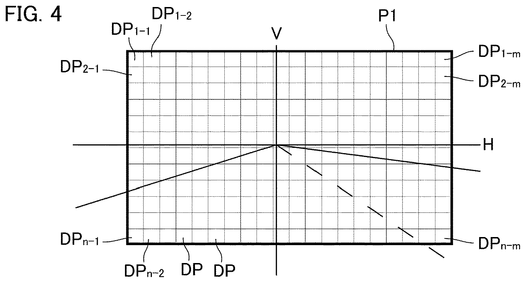

FIG. 4 is a view illustrating an example of a light distribution pattern formed by light beams emitted from the light source group 130 and transmitted through the projection lens 15. A light distribution pattern P1 illustrated in FIG. 4 is an example of a light distribution pattern in a case where a preceding vehicle or oncoming vehicle which is another vehicle is not present in front of the ego-vehicle 100. The light distribution pattern P1 is a light distribution pattern in a case where substantially the same power is supplied to each of the light sources 13 and light having substantially the same intensity is emitted from each of the light sources 13. Note that, in FIG. 4, and FIGS. 7 to 9 described below, a line V is a line that passes through the center in the left-right direction of the ego-vehicle 100 and extends in the up-down direction, and a line H is a horizontal line.

As illustrated in FIG. 4, in the present embodiment, the light distribution pattern P1 is substantially rectangular. The light distribution pattern P1 is formed by assembling a plurality of segmented light distribution patterns DP in the substantially positive direction. According to the present embodiment, the light distribution pattern P1 is a set of n rows × m columns of segmented light distribution patterns DP. The leftmost first column in FIG. 4 is the leftmost column when the direction of travel is used as a reference, and the rightmost mth column is the rightmost column when the direction of travel is used as a reference. The first row is the uppermost row, and the nth row is the lowermost row. In FIG. 4, in order to specify the position of each segmented light distribution pattern DP in the set, a portion of the segmented light distribution patterns DP is referred to as a segmented light distribution pattern DPₙ₋ₘ, or the like, for convenience. For example, the segmented light distribution pattern DP₁₋₁ is the uppermost and leftmost segmented light distribution pattern; the segmented light distribution pattern DP₂₋₁ is the second uppermost and leftmost segmented light distribution pattern; the segmented light distribution pattern DP₁₋₂ is the uppermost and second leftmost segmented light distribution pattern; and the segmented light distribution pattern DPₙ₋ₘ is the lowermost, and when the direction of travel is used as a reference, rightmost segmented light distribution pattern.

In the present embodiment, the position of each of the segmented light distribution patterns DP illustrated in FIG. 4 corresponds to the position of each of the light sources 13 illustrated in FIG. 3. Therefore, for example, the segmented light distribution pattern DP₁₋₁ is a segmented light distribution pattern formed by light emitted from the light source 13₁₋₁; the segmented light distribution pattern DP₂₋₁ is a segmented light distribution pattern formed by light emitted from the light source 13₂₋₂; the segmented light distribution pattern DP₁₋₂ is a segmented light distribution pattern formed by light emitted from the light source 13₁₋₂; and the segmented light distribution pattern DPₙ₋ₘ is a segmented light distribution pattern formed by light emitted from the light source 13ₙ₋ₘ. In the present embodiment, the light intensity in each of the segmented light distribution patterns DP in the light distribution pattern P1 is substantially the same.

As illustrated in FIG. 1, the control unit CO is connected to the power supply circuits 30, and controls the light source units 10 via the power supply circuits 30.

The determination unit 25 is connected to the control unit CO. The determination unit 25 determines whether the other vehicle detected by detection device 20 satisfies a prescribed requirement based on the detection signal from the detection device 20. Examples of this prescribed requirement include that the distance between the other vehicle and the ego-vehicle 100 is less than a prescribed distance, for example. The prescribed distance is, for example, 100 m.

In a case where the other vehicle is in a state of satisfying the prescribed requirement and a detection signal indicating that the other vehicle is a preceding vehicle is inputted from the detection device 20, the determination unit 25 according to the present embodiment outputs, to the control unit CO, a detection signal indicating that the other vehicle is a preceding vehicle, a signal relating to the distance from the ego-vehicle 100 to a rear windshield or a door mirror of the preceding vehicle, a signal indicating the position of the rear windshield or the door mirror of the preceding vehicle with respect to the ego-vehicle 100, and the like. In addition, in a case where the other vehicle is in a state of satisfying the prescribed requirement and a detection signal indicating that the other vehicle is an oncoming vehicle is inputted from the detection device 20, the determination unit 25 outputs, to the control unit CO, a detection signal indicating that the other vehicle is an oncoming vehicle, a signal indicating the distance from the ego-vehicle 100 to the front windshield of the oncoming vehicle, a signal indicating the position of the front windshield of the oncoming vehicle with respect to the ego-vehicle 100, and the like. On the other hand, in a case where the other vehicle does not satisfy the prescribed requirement and in a case where no detection signal is inputted from the detection device 20 to the determination unit 25, the determination unit 25 does not output the signal to the control unit CO. As described above, the determination by determination unit 25 is to change the signals to be output in different cases, according to the detection signal inputted from the detection device 20. Hereinafter, a detection signal indicating that another vehicle is an oncoming vehicle may be simply described as an oncoming vehicle detection signal, and a detection signal indicating that another vehicle is a preceding vehicle may be simply described as a preceding vehicle detection signal.

The power supply circuit 30 includes a driver, and adjusts the power supplied to each of the light sources 13 by the driver when a signal is inputted from the control unit CO. As a result, the intensity of the light emitted from each of the light sources 13 is adjusted. Note that the driver of the power supply circuit 30 may adjust the power supplied to each light source 13 by using PWM (Pulse Width Modulation) control. In this case, the intensity of the light emitted from each of the light sources 13 is adjusted by adjusting the duty cycle.

The memory ME is connected to the control unit CO, stores information, and is configured to be able to read the stored information. The memory ME is, for example, a non-transitory recording medium, and is preferably a semiconductor recording medium such as a RAM (Random Access Memory) or a ROM (Read Only Memory), but may include a recording medium of any format such as an optical recording medium or a magnetic recording medium. Note that the "non-transitory" recording medium includes all data-readable recording media except for a transitory, propagating signal, and does not exclude a volatile recording medium.

The memory ME stores, for example, a table in which information on a light distribution pattern formed by light emitted from the light source unit 10 and information on other vehicles detected by the detection device 20 are associated with each other. Examples of the information on the light distribution pattern formed by the light emitted from the light source unit 10 may include information on the power supplied to each light source 13, or the like. Examples of the information on the power supplied to each light source 13 include information on the power supplied to each light source 13 in a case where another vehicle is not detected, information on the power supplied to each light source in a case where another vehicle is detected, and information on the tilt angle of the ego-vehicle 100, and so forth. Examples of the information on the other vehicle detected by the detection device 20 include information on whether the other vehicle is a preceding vehicle or an oncoming vehicle, information on the distance from the ego-vehicle 100 to the front windshield, the rear windshield, and the door mirror of the other vehicle, and information on the positions of the front windshield, the rear windshield, and the door mirror of the other vehicle with respect to the ego-vehicle 100. Furthermore, examples of the information on the position of another vehicle with respect to the ego-vehicle 100 include information on the position of a pair of light spots in a captured image, and so forth.

Next, the detection device 20 and the tilt calculation device 21 constituting the vehicle headlight system 2 will be described.

As illustrated in FIG. 1, in the present embodiment, the detection device 20 includes a millimeter wave radar 27, a camera 28, and a detection unit 29. The camera 28 is attached to the front portion of the ego-vehicle 100 and captures an image of the front of the ego-vehicle 100 at prescribed time intervals, for example, 1/30 second intervals. Note that examples of the camera 28 include a CCD (Charged coupled device) camera. The captured image photographed by the camera 28 includes at least part of a region irradiated with light emitted from the light source unit 10. The millimeter wave radar 27 is attached to the front of the ego-vehicle 100, emits millimeter waves toward the front, and receives the millimeter waves reflected by another vehicle. The detection unit 29 is connected to the millimeter wave radar 27, the camera 28, and the determination unit 25. The detection unit 29 detects distances to the front windshield, the rear windshield, and the door mirror of another vehicle, positions of the front windshield, the rear windshield, and the door mirror of the other vehicle with respect to the ego-vehicle 100, and the like, based on data of a captured image photographed by the camera 28 and data of millimeter waves reflected by the other vehicle and received by the millimeter wave radar 27. In addition, the detection unit 29 identifies whether the other vehicle is a preceding vehicle or an oncoming vehicle on the basis of the data of the captured image and the millimeter wave data.

In the present embodiment, the detection unit 29 outputs an oncoming vehicle detection signal to the determination unit 25 in a case where a captured image in which a pair of white light spots having a higher luminance than a prescribed luminance exist at a prescribed interval in the left-right direction is inputted from the camera 28. Furthermore, according to the present embodiment, in a case where an oncoming vehicle detection signal is to be outputted to the determination unit 25, the detection unit 29 calculates the distance from the ego-vehicle 100 to the front windshield of the oncoming vehicle and the position of the front windshield of the oncoming vehicle on the basis of the positions of a pair of white light spots in the captured image, the distance between the pair of white light spots, and the data from the millimeter wave radar 27, and outputs a signal indicating the distance to, and the position of, the front windshield of the oncoming vehicle to the determination unit 25.

Further, in a case where a captured image in which a pair of red light spots having a higher luminance than the prescribed luminance exist at the prescribed interval in the left-right direction is inputted from the camera 28, the detection unit 29 outputs a preceding vehicle detection signal to the determination unit 25. Furthermore, according to the present embodiment, in a case where a preceding vehicle detection signal is outputted to the determination unit 25, the detection unit 29 calculates the distance from the ego-vehicle 100 to the rear windshield or door mirror of the preceding vehicle and the position of the rear windshield or door mirror of the preceding vehicle on the basis of the positions of a pair of red light spots in a captured image, the distance between the pair of red light spots, and the data from the millimeter wave radar 27, and outputs a signal indicating the distance and position to the rear windshield or door mirror of the preceding vehicle to the determination unit 25.

On the other hand, the detection unit 29 does not output the detection signal in a case where the captured image does not include the pair of light spots located at the prescribed interval in the left-right direction and having a higher luminance than the prescribed luminance or in a case where the millimeter waves received by the millimeter wave radar have a lower intensity than the prescribed intensity.

Note that the configuration of the detection device 20, a method of detecting another vehicle using the detection device 20, a method of calculating a distance from the ego-vehicle 100 to another vehicle or the position of another vehicle, a method of identifying an oncoming vehicle and a preceding vehicle, and the like, are not particularly limited. For example, the detection device 20 may use a LIDAR instead of the millimeter wave radar.

As illustrated in FIG. 1, in the present embodiment, the tilt calculation device 21 includes a vehicle height sensor 22 and an arithmetic unit 23. The vehicle height sensor 22 is connected to the arithmetic unit 23. In the present embodiment, the vehicle height sensor 22 is attached to a front wheel suspension of the ego-vehicle 100, and outputs a signal indicating a displacement amount of the suspension to the arithmetic unit 23. The arithmetic unit 23 is connected to the control unit CO. Based on the signal indicating the displacement amount, the arithmetic unit 23 calculates, based on a prescribed algorithm, the tilt angle of the ego-vehicle 100 in a case where the front side of the ego-vehicle 100 is tilted so as to be higher than the rear side and the tilt angle of the ego-vehicle 100 in a case where the rear side of the ego-vehicle is tilted so as to be higher than the front side, and outputs a signal indicating the tilt angle to the control unit CO. Note that, according to the present embodiment, the former tilt angle is represented by a plus sign, and the latter tilt angle is represented by a minus sign.

Note that the aforementioned control unit CO, the determination unit 25, the detection unit 29, and the arithmetic unit 23 can employ, for example, an integrated circuit such as a microcontroller, an IC (Integrated Circuit), an LSI (Large-scale Integrated Circuit), an ASIC (Application Specific Integrated Circuit), or may use an NC (Numerical Control) device. Also, in a case where an NC device is used, a machine learning device may be used, or a machine learning device may not be used. In addition, at least some of the control unit CO, the determination unit 25, the detection unit 29, and the arithmetic unit 23 may be part of an electronic control unit (ECU) of the ego-vehicle 100.

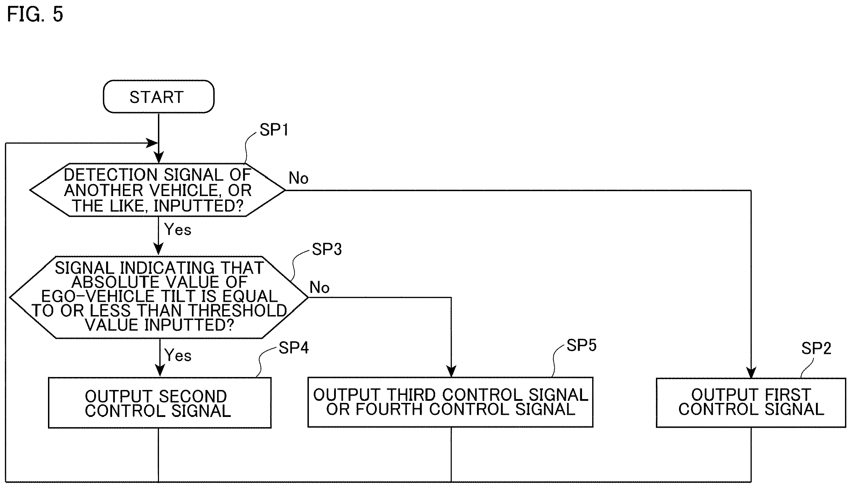

According to the present embodiment, the control unit CO changes the light distribution pattern by controlling the light source unit 10 as follows, for example. FIG. 5 is a flowchart illustrating an example of this control by the control unit CO, and illustrates an example of the control from one time point while the ego-vehicle 100 is traveling. As illustrated in FIG. 5, the control flow includes steps SP1 to SP5.

### (Step SP1)

In a case where both an oncoming vehicle detection signal and a preceding vehicle detection signal, which are other vehicle detection signals, are not inputted from the detection unit 29 to the control unit CO via the determination unit 25, the control unit CO advances the control flow to step SP2. On the other hand, when either of an oncoming vehicle detection signal and a preceding vehicle detection signal, which are other vehicle detection signals, is inputted from the detection unit 29 to the control unit CO via the determination unit 25, the control unit CO advances the control flow to step SP3.

### (Step SP2)

In this step, the control unit CO outputs the first control signal to the power supply circuit 30 by referring to the data stored in the memory. The first control signal is a signal for applying power to each light source 13 so as to form the light distribution pattern P1 illustrated in FIG. 4. As a result, the same power is applied to all of the plurality of light sources 13 via the power supply circuit 30. In this way, light having substantially the same intensity is emitted from each of the light sources 13, and the light distribution pattern P1 illustrated in FIG. 4 is formed. After this step, the control unit CO returns the control flow to step SP1.

### (Step SP3)

In a case where a signal indicating that the absolute value of the tilt of the ego-vehicle 100 is equal to or less than the prescribed threshold value over the prescribed time is inputted from the arithmetic unit 23 of the tilt calculation device 21 to the control unit CO, the control unit CO advances the control flow to step SP4. Note that the prescribed time may be, for example, 20 mS or more and 500 mS or less. The threshold value of the tilt may be, for example, 0.5° or more and 3° or less. When the tilt of the ego-vehicle 100 is equal to or less than such a threshold value, the ego-vehicle is considered to be traveling in a horizontal direction and not tilted in the up-down direction. On the other hand, in a case where a signal indicating that the absolute value of the tilt of the ego-vehicle 100 is greater than the prescribed threshold is inputted from the arithmetic unit 23 to the control unit CO, the control unit CO advances the control flow to step SP5.

### (Step SP4)

In this step, the control unit CO controls the light source unit 10 as follows. Here, a case where a preceding vehicle detection signal is inputted to the control unit CO and an oncoming vehicle detection signal is not inputted to the control unit CO will be described.

When a preceding vehicle detection signal, a signal indicating the distance from the ego-vehicle 100 to the rear windshield and the door mirror of the preceding vehicle, a signal indicating the position of the rear windshield and the door mirror of the preceding vehicle, and a signal in which the absolute value of the tilt of the ego-vehicle 100 is equal to or less than the threshold value are inputted to the control unit CO, the control unit CO refers to the data stored in the memory ME, and outputs a second control signal corresponding to these signals to the power supply circuit 30. The power supply circuit 30 adjusts the power to be supplied to the plurality of light sources 13 on the basis of the second control signal.

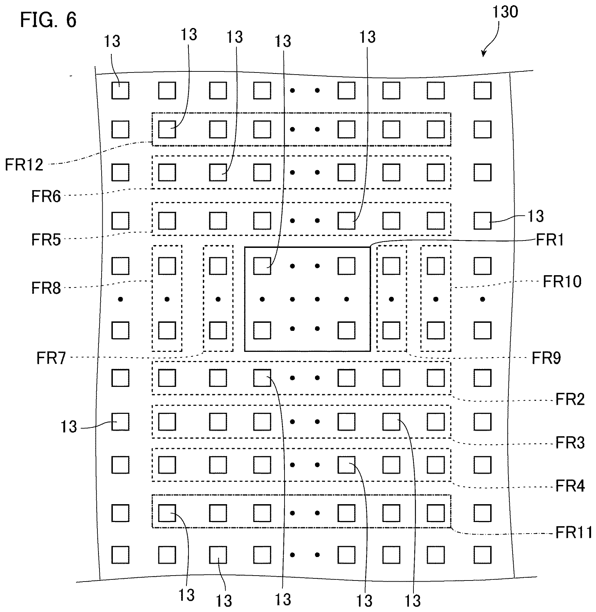

FIG. 6 is an enlarged view of part of the light source group 130. The light source group 130 includes a plurality of first light sources and a plurality of second light sources. Each of the plurality of first light sources is a light source 13 that is located within a frame FR1 indicated by a solid line, and emits light toward a region overlapping the detected rear windshield of the preceding vehicle and the pair of left and right door mirrors and a surrounding region thereof. Note that the rear windshield and the pair of left and right door mirrors of the preceding vehicle are visual recognition parts of the preceding vehicle for the driver of the preceding vehicle to visually recognize the outside of the vehicle. Each of the plurality of second light sources is a light source 13 that is located within the frame FR1, and emits light toward a region excluding both the region overlapping the visual recognition part of the preceding vehicle and also the surrounding region thereof.

According to the present embodiment, the second control signal is a control signal for not supplying power to the first light source. Therefore, according to the present embodiment, the power supplied to the first light source is substantially zero, and the intensity of the light emitted from each of the first light sources is substantially zero. In this manner, the control unit CO causes each of the first light sources to emit light having a lower intensity than in a case where no detection signal is inputted. Further, according to the present embodiment, the second control signal is a control signal for supplying power to the second light source as follows. According to the present embodiment, light having a higher intensity than that of the first light source is emitted from each of the second light sources.

Based on the second control signal, the power supply circuit 30 supplies first power greater than zero to each of the plurality of light sources 13 arranged in the row one row below the frame FR1. In FIG. 6, the plurality of light sources 13 to which the first power is supplied are light sources 13 arranged in a broken-line frame FR2, and the light source 13 in the frame FR2 is located immediately below the first light source. Furthermore, based on the second control signal, the power supply circuit 30 supplies second power greater than the first power to each of the light sources 13 arranged in the broken-line frame FR3 located in the row one row below the frame FR2. The frame FR3 is located immediately below the frame FR1 and the frame FR2. In addition, based on the second control signal, the power supply circuit 30 supplies third power greater than the second power to each of the light sources 13 arranged in the broken-line frame FR4 located in the row one row below the frame FR3. The frame FR4 is located immediately below the frame FR3.

Further, based on the second control signal, the power supply circuit 30 supplies fourth power greater than zero to each of the plurality of light sources 13 arranged in the row one row above the frame FR1. In FIG. 6, the plurality of light sources 13 to which the fourth power is supplied are light sources 13 arranged in a broken-line frame FR5, and the light sources 13 in the frame FR5 are located immediately above the first light source. In addition, based on the second control signal, the power supply circuit 30 supplies fifth power greater than the fourth power to each of the light sources 13 arranged in the broken-line frame FR6 located in the row one row above the frame FR5. The frame FR6 is located immediately above the frame FR1 and the frame FR5.

In addition, based on the second control signal, the power supply circuit 30 supplies sixth power greater than zero to each of the plurality of light sources 13 arranged in the column one row left of the frame FR1. In FIG. 6, the plurality of light sources 13 to which the sixth power is supplied are light sources 13 arranged in a broken-line frame FR7, and the light sources 13 in the frame FR7 are located immediately beside the first light source. Further, based on the second control signal, the power supply circuit 30 supplies seventh power greater than the sixth power to each of the light sources 13 arranged in the broken-line frame FR8 located in the column one column to the left of the frame FR7. The frame FR8 is located immediately beside the frame FR1 and the frame FR7.

In addition, based on the second control signal, the power supply circuit 30 supplies eighth power greater than zero to each of the plurality of light sources 13 arranged in the column one row right of the frame FR1. In FIG. 6, the plurality of light sources 13 to which the eighth power is supplied are light sources 13 arranged in a broken-line frame FR9, and the light sources 13 in the frame FR9 are located immediately beside the first light source. Further, based on the second control signal, the power supply circuit 30 supplies ninth power greater than the eighth power to each of the light sources 13 arranged in the broken-line frame FR10 located in the column one column to the right of the frame FR9. The frame FR10 is located immediately beside the frame FR1 and the frame FR9.

In addition, based on the second control signal, the power supply circuit 30 supplies the tenth power to each of the light sources 13 excluding the light sources 13, among the second light sources, which are located in the frame FR2 to the frame FR10. The 10th power is greater than the first power to the 9th power and, according to the present embodiment, is equal to the power supplied to each of the light sources 13 in the case of forming the light distribution pattern P1 illustrated in FIG. 4.

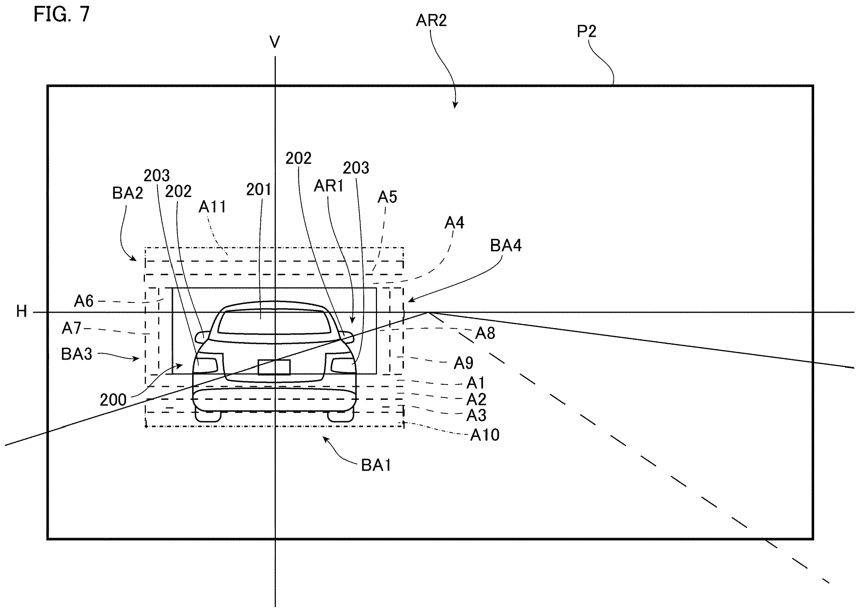

The power applied to the light sources and the intensity of the light emitted from the light sources are substantially proportional to each other. Therefore, by differentiating the power supplied to the light sources 13 as described above, a light distribution pattern in which the light intensity varies, depending on the region, is formed. FIG. 7 illustrates a light distribution pattern P2 formed based on the second control signal.

As described above, each of the plurality of first light sources in the frame FR1 emits light toward a region overlapping the detected rear windshield of the preceding vehicle 200 and the pair of left and right door mirrors and a first region AR1 surrounding said region. Incidentally, in this step, the power supplied to each of the first light sources is zero. Therefore, as illustrated in FIG. 7, in the light distribution pattern P2, in the region overlapping the rear windshield 201 of the preceding vehicle 200 and the pair of left and right door mirrors 202 and the first region AR1 surrounding the region, the light intensity is substantially zero, and the region is darker than the surrounding region. As described above, the light source group 130 includes a plurality of first light sources that emit light toward the first region AR1, and in this step, the control unit CO causes each of the first light sources to emit light having a lower light intensity than in a case where no detection signal is inputted. Note that, in a case where the other vehicle is the preceding vehicle 200, the position of the lower end of the first region AR1 is below the lower end of the rear windshield 201 of the preceding vehicle 200, and according to the present embodiment, is the position of the lower ends of the pair of left and right rear lamps 203 of the preceding vehicle 200. On the other hand, because the first power to the tenth power, which are greater than zero, are supplied to a second light source which is a light source 13 other than the first light source, a second region AR2, which is a region surrounding the first region AR1, becomes brighter than the first region AR1.

Incidentally, the light sources 13 arranged in the frame FR2 are located immediately below the first light source, and hence the light emitted from each of the light sources 13 in the frame FR2 irradiates the region A1 surrounded by a substantially belt-shaped broken line located immediately below the first region AR1. In this way, the region A1 becomes a brighter region than the first region AR1. In addition, because the light source 13 disposed in the frame FR3 is located immediately below the light source 13 disposed in the frame FR2, the light emitted from each of the light sources 13 in the frame FR3 irradiates the region A2 surrounded by a substantially belt-shaped broken line located immediately below the region A1. In this way, the region A2 becomes a brighter region than the region A1. Similarly, the light emitted from each of the light sources 13 in the frame FR4 irradiates the region A3 surrounded by a broken line immediately below the region A2, and the region A3 is a brighter region than the region A2. A region including these regions A1 to A3 is a lower-side region BA1 extending downward from the first region AR1 on the lower side of the other vehicle in the second region AR2, is a region where the light intensity increases toward the lower side, and is a region where the light intensity decreases toward the first region AR1. A region below the region A3 is brighter than the region A3.

As described above, the light source group 130 includes a plurality of second light sources that emit light toward the lower-side region BA1 below the first region AR1. Then, in this step, among all the second light sources that emit light toward the second region AR2 in the light source group 130, the control unit CO causes each of the second light sources that emit light toward a lower-side region BA1 lower than the first region AR1 to emit light with an increasingly lower intensity toward a side closer to the first region AR1.

In addition, because the light sources 13 arranged in the frame FR5 are located immediately above the first light source, the light emitted from each of the light sources 13 in the frame FR5 irradiates the region A4 surrounded by a substantially belt-shaped broken line located immediately above the first region AR1. In this way, the region A4 is a brighter region than the first region AR1. Furthermore, because the light source 13 disposed in the frame FR6 is located immediately above the light source 13 disposed in the frame FR5, the light emitted from each of the light sources 13 in the frame FR6 irradiates the region A5 surrounded by a substantially belt-shaped broken line located immediately above the region A4. In this way, the region A5 becomes a brighter region than the region A4. The region including these regions A4 and A5 is an upper-side region BA2 extending upward from the first region AR1 on the upper side of the other vehicle in the second region AR2, is a region where the light intensity increases toward the upper side, and is a region where the light intensity decreases toward the first region AR1. The region above the region A5 is brighter than the region A5. Note that the up-down width of the upper-side region BA2 including the two regions A4 and A5 is smaller than the width in the up-down direction of the lower-side region BA1 including the three regions A1 to A3.

As described above, the light source group 130 includes the plurality of second light sources that emit light toward the upper-side region BA2 above the first region AR1. Then, in this step, among all the second light sources that emit light toward the second region AR2 in the light source group 130, the control unit CO causes each of the second light sources that emit light toward an upper-side region BA2 above the first region AR1 to emit light with an increasingly lower intensity toward a side closer to the first region AR1.

In addition, because the light sources 13 arranged in the frame FR9 are located immediately beside the right side of the first light source in a front view, the light emitted from each of the light sources 13 in the frame FR9 irradiates the region A6 surrounded by a substantially belt-shaped broken line located immediately beside the left side of the first region AR1. In this way, the region A6 becomes a brighter region than the first region AR1. Further, because the light sources 13 arranged in the frame FR10 are located immediately beside the right side of the light source 13 disposed in the frame FR9 in a front view, the light emitted from each of the light sources 13 in the frame FR10 irradiates the region A7 surrounded by a substantially belt-shaped broken line located immediately beside the left side of the region A6. In this way, the region A7 becomes a brighter region than the region A6. The region including these regions A6 and A7 is a left-side region BA3 extending to the left side from the first region AR1 on the left side of the other vehicle in the second region AR2, is a region where the light intensity increases toward the left side, and is a region where the light intensity decreases toward the first region AR1. The region on the left side of the region A7 is brighter than the region A7. Note that, according to the present embodiment, the width in the left-right direction of the left-side region BA3 including the two regions A6 and A7 is smaller than the width in the up-down direction of the lower-side region BA1 including the three regions A1 to A3.

As described above, the light source group 130 includes the plurality of second light sources that emit light toward the left-side region BA3 on the left side of the first region AR1. Then, in this step, among all the second light sources that emit light toward the second region AR2 in the light source group 130, the control unit CO causes each of the second light sources that emit light toward a left-side region BA3 to the left of the first region AR1 to emit light with an increasingly lower intensity toward a side closer to the first region AR1.

In addition, because the light sources 13 arranged in the frame FR7 are located immediately beside the left side of the first light source in a front view, the light emitted from each of the light sources 13 in the frame FR7 irradiates the region A8 surrounded by a substantially belt-shaped broken line located immediately beside the right side of the first region AR1. In this way, the region A8 becomes a brighter region than the first region AR1. In addition, because the light sources 13 arranged in the frame FR8 are located immediately beside the left side of the light source 13 disposed in the frame FR7 in a front view, the light emitted from each of the light sources 13 in the frame FR8 irradiates the region A9 surrounded by a substantially belt-shaped broken line located immediately beside the right side of the region A8. In this way, the region A9 becomes a brighter region than the region A8. The region including these regions A8 and A9 is a right-side region BA4 extending rightward from the first region AR1 on the right side of the other vehicle in the second region AR2, and is a region where the light intensity increases toward the right side. The region on the right side of the region A9 is brighter than the region A9. Note that, according to the present embodiment, the width in the left-right direction of the right-side region BA4 including the two regions A8 and A9 is smaller than the width in the up-down direction of the lower-side region BA1 including the three regions A1 to A3.

As described above, the light source group 130 includes the plurality of second light sources that emit light toward the left-side region BA4 on the right side of the first region AR1. In this step, among all the second light sources that emit light toward the second region AR2 in the light source group 130, the control unit CO causes each of the second light sources that emit light toward a right-side region BA4 to the right of the first region AR1 to emit light with an increasingly lower intensity toward a side closer to the first region AR1.

After this step, the control unit CO returns the control flow to step SP1.

### (Step SP5)

In this step, the control unit CO controls the light source unit 10 as follows. Here, similarly to step SP4, a case where a preceding vehicle detection signal is inputted to the control unit CO and an oncoming vehicle detection signal is not inputted to the control unit CO will be described.

Upon receiving an input of the detection signal of the preceding vehicle, the signal indicating the distance between the ego-vehicle 100 and the preceding vehicle, the signal indicating the position of the preceding vehicle, and the signal indicating that the absolute value of the tilt of the ego-vehicle 100 is greater than the threshold value, the control unit CO refers to the data stored in the memory ME and outputs a third control signal corresponding to these signals to the power supply circuit 30. The third control signal is a control signal outputted in a case where the tilt of the ego-vehicle 100 is positive.

Based on the third control signal, the power supply circuit 30 supplies the eleventh power, which is greater than the third power and less than the tenth power, to each of the light sources 13 located in the frame FR11 located immediately below the frame FR4. In FIG. 6, the frame FR11 is indicated by an alternate long-and-short dash line. Note that this step is similar to step SP4 except that the eleventh power is supplied to the light sources 13 located in the frame FR11.

The light source 13 disposed in the frame FR11 is located immediately below the light source 13 disposed in the frame FR4. For this reason, as illustrated in FIG. 7, the light emitted from each of the light sources 13 in the frame FR11 irradiates the region A10 surrounded by a substantially belt-shaped alternate long-and-short dash line located immediately below the region A3. In this way, the region A10 becomes a brighter region than the region A3. Note that the region below the region A10 is brighter than the region A10. A region including the regions A1 to A3 and A10 is a lower-side region BA1 extending downward from the first region AR1 on the lower side of the other vehicle in the second region AR2, is a region where the light intensity increases toward the lower side, and is a region where the light intensity decreases toward the first region AR1. The lower-side region BA1 in this step includes four regions A1 to A3, and A10. Therefore, the width in the up-down direction of the lower-side region BA1 in this step is greater than the width in the up-down direction of the lower-side region BA1 in step SP4.

Based on the third control signal, the power supply circuit 30 adjusts the power supplied to the light source group 130 such that the power applied to the lower row increases as the signal indicating the tilt of the ego-vehicle 100 indicates a greater tilt. In this way, in a case where the ego-vehicle 100 is tilted such that the front side of the ego-vehicle 100 is higher than the rear side, the control unit CO increases the width of the lower-side region BA1 in the up-down direction as the tilt of the ego-vehicle 100 increases.

On the other hand, when a signal indicating that the absolute value of the tilt of the ego-vehicle 100 is greater than the threshold value and the tilt of the ego-vehicle 100 is negative is inputted, the control unit CO refers to the data stored in the memory ME and outputs a fourth control signal corresponding to these signals to the power supply circuit 30.

Based on the fourth control signal, the power supply circuit 30 supplies a twelfth power greater than the fifth power and less than the tenth power to each of the light sources 13 located in the frame FR12 located immediately above the frame FR6. In FIG. 6, a frame FR12 is indicated by an alternate long-and-short dash line. Note that this step is similar to step SP4 except that the twelfth power is supplied to the light sources 13 located in the frame FR12.

The light sources 13 arranged in the frame FR12 are located immediately above the light sources 13 arranged in the frame FR6. For this reason, as illustrated in FIG. 7, the light emitted from each of the light sources 13 in the frame FR12 irradiates the region A11 located immediately above the region A5 and surrounded by a substantially belt-shaped alternate long-and-short dash line. In this way, region A11 becomes a brighter region than region A5. Note that the region above region A11 is brighter than region A11. The region including the regions A4, A5, and A11 is an upper-side region BA2 extending upward from the first region AR1 on the upper side of the other vehicle in the second region AR2, is a region where the light intensity increases toward the upper side, and is a region where the light intensity decreases toward the first region AR1. The upper-side region BA2 in this step includes three regions A4, A5, and A11. Therefore, the width in the up-down direction of the upper-side region BA2 in this step is greater than the width in the up-down direction of the upper-side region BA2 in step SP4.

Based on the fourth control signal, the power supply circuit 30 adjusts the power supplied to the light source group 130 such that the power applied to the upper row increases as the signal indicating the tilt of the ego-vehicle 100 indicates a greater tilt. In this way, in a case where the ego-vehicle 100 is tilted such that the rear side of the ego-vehicle 100 is higher than the front side, the control unit CO increases the width of the upper-side region BA2 in the up-down direction as the tilt of the ego-vehicle 100 increases.

After this step, the control unit CO returns the control flow to step SP1.

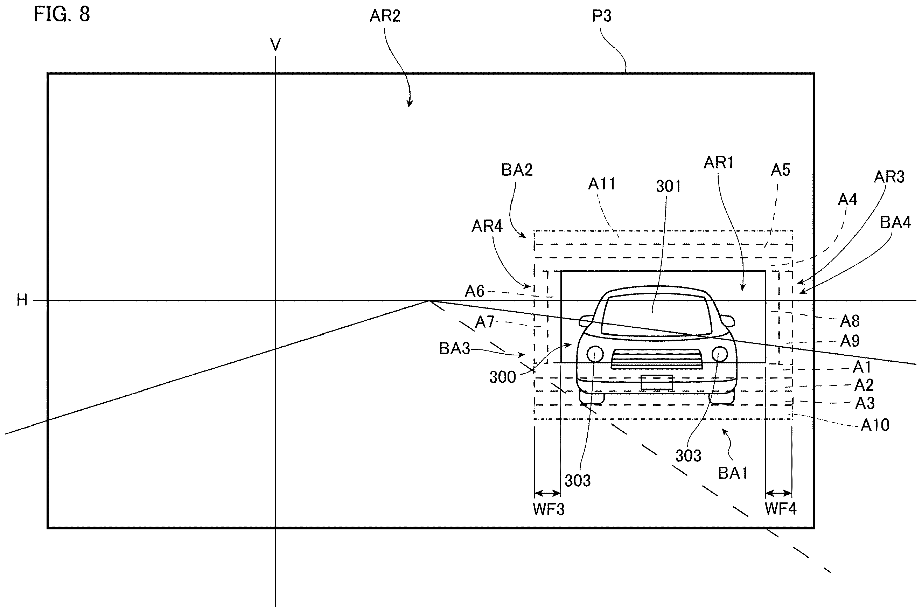

Note that an example in which the other vehicle is a preceding vehicle has been described for steps SP4 and SP5 described above. However, the control unit CO similarly performs the control in a case where the detection signal of the oncoming vehicle is inputted. As a result, a light distribution pattern P3 illustrated in FIG. 8 is formed in step SP4. The light distribution pattern P3 includes a first region AR1 including a region overlapping a front windshield 301 of the oncoming vehicle 300 and a second region AR2 surrounding the first region AR1. The first region AR1 is darker than the second region AR2. Note that the front windshield 301 is a visual recognition part of the oncoming vehicle 300 for the driver of the oncoming vehicle 300 to visually recognize the outside of the vehicle. In a case where the other vehicle is the oncoming vehicle 300, the position of the lower end of the first region AR1 is below the lower end of the front windshield 301 of the oncoming vehicle 300, and according to the present embodiment, is the position of the lower ends of a pair of left and right headlamps 303 of the oncoming vehicle 300. Further, similarly to the light distribution pattern P2, the second region AR2 includes a lower-side region BA1 including the regions A1 to A3, an upper-side region BA2 including the regions A4 and A5, a left-side region BA3 including the regions A6 and A7, and a right-side region BA4 including the regions A8 and A9. In addition, the control unit CO performs step SP5 to form a lower-side region BA1 which includes the regions A1 to A3 and A10 or an upper-side region BA2 which includes the regions A4, A5 and A11.

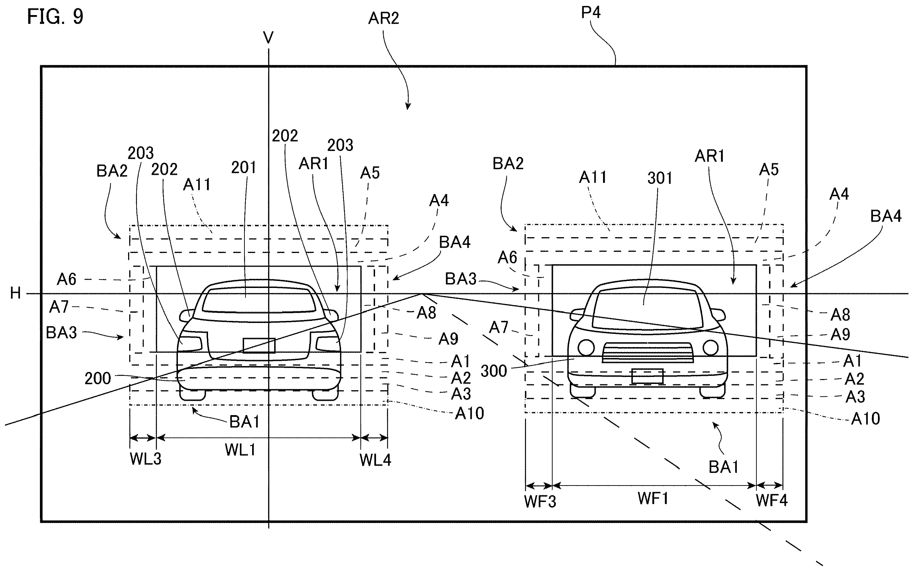

Furthermore, the control unit CO similarly performs control in a case where both the detection signal of the preceding vehicle and the detection signal of the oncoming vehicle are inputted. As a result, a light distribution pattern P4 illustrated in FIG. 9 is formed in step SP4. In the light distribution pattern P4, a lower-side region BA1, an upper-side region BA2, a left-side region BA3, and a right-side region BA4 are formed around a first region AR1 which includes a region overlapping the rear windshield 201 and the pair of left and right door mirrors 202, which are visual recognition parts of the preceding vehicle 200, and a lower-side region BA1, an upper-side region BA2, a left-side region BA3, and a right-side region BA4 are formed around a first region AR1 which includes a region overlapping the front windshield 301, which is a visual recognition part of the oncoming vehicle 300. In addition, when the control unit CO performs step SP5, a lower-side region BA1 including the regions A1 to A3, and A10 or an upper-side region BA2 including the regions A4, A5, and A11 is formed in each of the preceding vehicle 200 and the oncoming vehicle 300.

As described above, the vehicle headlight 1 according to the present embodiment is equipped with the light source unit 10 for forming a light distribution pattern which can be changed by light beams emitted from the light source group 130; and the control unit CO. In a case where a detection signal of another vehicle present in front of the ego-vehicle 100 is inputted from the detection unit 29 for detecting the other vehicle, the control unit CO causes each of the first light sources, which emit light toward the first region AR1 including the region overlapping the visual recognition part of the other vehicle in the light source group 130, to emit light having a lower intensity than in a case where no detection signal is inputted, and causes, among second light sources that emit light toward a second region AR2 surrounding a first region AR1 in the light source group 130, the second light source which emits light toward a lower-side region BA1 below the first region, to emit light with an increasingly lower intensity toward the side closer to the first region AR1.

With this vehicle headlight 1, because the intensity of the light emitted from the first light source is lower than in a case where no detection signal of the other vehicle is inputted, the first region AR1 including the region overlapping the visual recognition part of the other vehicle becomes darker than in the case where no detection signal is inputted. Therefore, dazzling of other vehicles when performing ADB control can be suppressed. As described above, according to the present embodiment, the first region AR1 acts as a dazzling suppression region that suppresses dazzling of another vehicle.

In addition, in this vehicle headlight 1, the control unit CO causes second light sources, which emit light toward a lower-side region BA1 of the second region AR2 located below the first region AR1 to emit light with an increasingly lower intensity toward a side closer to the first region AR1. Therefore, in this vehicle headlight 1, gradation in which the light intensity decreases toward the first region AR1 is formed in the lower-side region BA1 located below the first region AR1. In this way, the lower-side region in the second region AR2 becomes darker toward the first region AR1. Therefore, for example, even in a case where the lower-side region of the second region AR2 overlaps the visual recognition part of another vehicle due to the ego-vehicle 100 colliding and tilting upward, this gradation is interposed, and therefore the visual recognition part of another vehicle is prevented from being suddenly brightly irradiated. Therefore, with this vehicle headlight 1, it is possible to suppress dazzling of another vehicle more effectively when performing ADB control.

Furthermore, in this vehicle headlight 1, in a case where the ego-vehicle 100 is tilted such that the front side of the ego-vehicle 100 is higher than the rear side, the control unit CO increases the width of the lower-side region BA1 in the up-down direction as the tilt of the ego-vehicle 100 increases. In this way, in a case where the second region AR2 moves upward and overlaps the visual recognition part of another vehicle, the lower-side region BA1 where the gradation is formed can easily overlap the visual recognition part of the other vehicle. For this reason, it is possible to suppress dazzling of another vehicle more effectively when performing ADB control. Note that, in a case where the ego-vehicle 100 is tilted such that the front side of the ego-vehicle 100 is higher than the rear side, there is no need to increase the width of the lower-side region BA1 in the up-down direction as the tilt of the ego-vehicle 100 increases.

Further, in the vehicle headlight 1, in a case where the detection signal is inputted from the detection unit 29, the control unit CO causes the second light source that emits light toward the upper-side region BA2 above the first region AR1 in the second region AR2 to emit light with an increasingly lower intensity toward a side closer to the first region AR1. With such a configuration, gradation in which the light intensity decreases toward the first region AR1 is formed in the second region AR2 located above the first region AR1. In this way, the upper-side region in the second region AR2 becomes darker toward the first region AR1. Therefore, for example, even in a case where the upper-side region of the second region AR2 overlaps the visual recognition part of another vehicle due to the ego-vehicle 100 colliding and tilting downward, this gradation is interposed, and therefore the visual recognition part of another vehicle is prevented from being suddenly brightly irradiated. Thus, it is possible to suppress dazzling of another vehicle more effectively when performing ADB control. Note that it is not essential to form the upper-side region BA2 having such gradation.

Furthermore, in this vehicle headlight 1, in a case where the ego-vehicle 100 is tilted such that the rear side of the ego-vehicle 100 is higher than the front side, the control unit CO increases the width of the upper-side region BA2 in the up-down direction as the tilt of the ego-vehicle 100 increases. In this way, in a case where the second region AR2 moves downward and overlaps the visual recognition part of another vehicle, the upper-side region BA2 where the gradation is formed is more likely to overlap the visual recognition part of another vehicle. For this reason, it is possible to suppress dazzling of another vehicle more effectively when performing ADB control. Note that, in a case where the ego-vehicle 100 is tilted such that the rear side of the ego-vehicle 100 is higher than the front side, there is no need to increase the width of the upper-side region BA2 in the up-down direction as the tilt of the ego-vehicle 100 increases.

In addition, in the vehicle headlight 1, in a case where the detection signal is inputted from the detection unit 29, the control unit CO causes at least one second light source of: a second light source that emits light toward the left-side region BA3 on the left side of the first region AR1 among the second light sources, and a second light source that emits light toward the right-side region BA4 on the right side of the first region AR1 among the second light sources, to emit light with an increasingly lower intensity toward the side closer to the first region AR1. With such a configuration, gradation in which the light intensity decreases toward the first region AR1 is formed in the second region AR2 located on the left side of the first region AR1. In this case, the left-side region BA3 becomes darker toward the first region AR1. Further, with such a configuration, gradation in which the light intensity decreases toward the first region AR1 is formed in the second region AR2 located on the right side of the first region AR1. In this case, the right-side region BA4 becomes darker toward the first region AR1. Therefore, even in a case where at least one of the left-side region and the right-side region of the second region AR2 overlaps the visual recognition part of the other vehicle due to a change in the relative position between the ego-vehicle and the other vehicle in the left-right direction, this gradation is interposed, and therefore the visual recognition part of another vehicle is prevented from being suddenly brightly irradiated. Thus, it is possible to suppress dazzling of another vehicle more effectively when performing ADB control. Note that it is not essential to form the left-side region BA3 and the right-side region BA4 having such gradation.

In addition, in the vehicle headlight 1, the width in the left-right direction of the left-side region BA3 and the right-side region BA4, respectively, is smaller than the width in the up-down direction of the lower-side region BA1. In a case where the width in the left-right direction of each of the left-side region BA3 and the right-side region BA4 is smaller than the width in the up-down direction of the lower-side region BA1, the region where the gradation is not formed in the second region AR2 can be expanded in comparison with the case where the width in the left-right direction of the left-side region BA3 and the right-side region BA4, respectively, is equal to or greater than the width in the up-down direction of the lower-side region BA1. Because the region where the gradation is not formed is located on the side opposite to the first region AR1 side of a left-side region BA3 and a right-side region BA4, respectively, this region is substantially brighter than the left-side region BA3 and the right-side region BA4. Therefore, because the region in which the gradation is not formed in the second region AR2 is widened, the front of the ego-vehicle 100 can be brightened, and the visibility when performing ADB control can be improved.

Note that, according to the present embodiment, an example has been described in which the width in the left-right direction of the left-side region BA3 and the right-side region BA4, respectively, is smaller than the width in the up-down direction of the lower-side region BA1. However, only one of the width of the left-side region BA3 in the left-right direction and the width of the right-side region BA4 in the left-right direction may be made smaller than the width of the lower-side region BA1 in the up-down direction. In this case, in comparison with the case where both the width of the left-side region BA3 in the left-right direction and the width of the right-side region BA4 in the left-right direction are equal to or greater than the width of the lower-side region BA1 in the up-down direction, it is possible to widen the region where gradation is not formed in the second region, and it is possible to improve visibility when performing ADB control. However, it is not essential to make at least one of the width of the left-side region BA3 in the left-right direction and the width of the right-side region BA4 in the left-right direction smaller than the width of the lower-side region BA1 in the up-down direction.

Further, in the vehicle headlight 1, the width in the up-down direction of the upper-side region BA2 is smaller than the width in the up-down direction of the lower-side region BA1. In this way, the visibility of the upper side can be enhanced.

As described above, the present invention has been described by taking the above-described embodiments as examples, but the present invention is not limited thereto.

For example, in the above embodiment, an example in which power is not supplied to the first light source was described, but power may be supplied to the first light source as long as the first light source emits light having a lower intensity than that of the second light source and the light intensity in the first region AR1 does not dazzle another vehicle.

In addition, as long as the control unit CO causes the first light source to emit light having a lower intensity than that of the second light source, and causes the second light source that emits light toward a first boundary region in the second region to emit light with an increasingly lower intensity toward a side closer to a boundary with the first region, a changeable light distribution pattern formed by each light emitted from the light source unit 10 is not limited to the light distribution pattern disclosed in the above embodiment.

In addition, for example, in the light distribution pattern P4 illustrated in FIG. 9, the control unit CO may make the ratio of the width WF3 in the left-right direction of the left-side region BA3 to the width WF1 in the left-right direction of the first region AR1, in a case where the other vehicle is the oncoming vehicle 300, greater than the ratio of the width WL3 in the left-right direction of the left-side region BA3 to the width WL1 in the left-right direction of the first region AR1 in a case where the other vehicle is the preceding vehicle 200. Here, in a case where the other vehicle is the oncoming vehicle 300, the number of first light sources that emit light toward the first region AR1 and are aligned in the left-right direction is represented by a number A1, and the number of second light sources that increase in the power supplied with increasing distance from the first region AR1 in the left-right direction in the left-side region BA3 is represented by a number B1. In addition, in a case where the other vehicle is the preceding vehicle 200, the number of first light sources that emit light toward the first region AR1 and are aligned in the left-right direction is represented by a number C1, and the number of second light sources that increase in the power supplied with increasing distance from the first region AR1 in the left-right direction in the left-side region BA3 is represented by a number D1. In order to make the ratio of the width WF3 to the width WF1 greater than the ratio of the width WL3 to the width WL1, the power supply circuit 30 may adjust the power supplied to the light source group 130 such that the ratio of the number B1 to the number A1 becomes greater than the ratio of the number D1 to the number C1. In addition to such a configuration, or instead of such a configuration, the control unit CO may make the ratio of the width WF4, in the left-right direction of the right-side region BA4 to the width WF1 in the left-right direction of the first region AR1 in a case where the other vehicle is the oncoming vehicle 300, greater than the ratio of the width WL4 in the left-right direction of the right-side region BA4 to the width WL1 in the left-right direction of the first region AR1 in a case where the other vehicle is the preceding vehicle 200. Here, in a case where the other vehicle is the oncoming vehicle 300, the number of first light sources that emit light toward the first region AR1 and are aligned in the left-right direction is represented by a number A2, and the number of second light sources that increase in the power supplied with increasing distance from the first region AR1 in the left-right direction in the right-side region BA4 is represented by a number B2. In addition, in a case where the other vehicle is the preceding vehicle 200, the number of first light sources that emit light toward the first region AR1 and are aligned in the left-right direction is represented by a number C2, and the number of second light sources that increase in the power supplied with increasing distance from the first region AR1 in the left-right direction in the right-side region BA4 is represented by a number D2. In order to make the ratio of the width WF4 to the width WF1 greater than the ratio of the width WL4 to the width WL1, the power supply circuit 30 may adjust the power supplied to the light source group 130 such that the ratio of the number B2 to the number A2 becomes greater than the ratio of the number D2 to the number C2. The oncoming vehicle approaches more rapidly than the preceding vehicle. For this reason, the relative position in the left-right direction between the ego-vehicle and the oncoming vehicle is easily shifted to the left side and the right side in comparison with the relative position in the left-right direction between the ego-vehicle and the preceding vehicle. According to such a configuration, it is possible to increase the widths of the left-side region BA3 and the right-side region BA4 in the left-right direction with respect to the oncoming vehicle 300, in comparison with a case where the ratio of the width is made equal to or less than the ratio of the left-side region BA3 and the right-side region BA4 with respect to the first region AR1 in a case where the other vehicle is the preceding vehicle 200. For this reason, even in a case where the oncoming vehicle 300 rapidly approaches the ego-vehicle and where the left-side region or right-side region of the second region AR2 overlaps the visual recognition part of the oncoming vehicle 300, the visual recognition part of the approaching oncoming vehicle 300 can be prevented from being suddenly brightly irradiated by interposing the left-side region BA3 or the right-side region BA4 where gradation is formed. Thus, it is possible to suppress dazzling of an oncoming vehicle 300 effectively when performing ADB control.

A width in the left-right direction in a third region, which is the region farther from the ego-vehicle 100 out of the left-side region BA3 and the right-side region BA4 in a case where the other vehicle is an oncoming vehicle 300, may be greater than a width in the left-right direction in a fourth region, which is the region closer to the ego-vehicle 100 out of the left-side region BA3 and the right-side region BA4 in a case where the other vehicle is the oncoming vehicle 300. In this case, the power supply circuit 30 may adjust the power supplied to the light source group 130 such that the width in the left-right direction in the third region is greater than the width in the left-right direction in the fourth region. Specifically, the power supply circuit 30 may adjust the power that is supplied to the light source group 130 such that the number of second light sources for which the power supplied thereto increases with increasing distance in the left-right direction from the first region AR1 in the third region is greater than the number of second light sources for which the power supplied thereto increases with increasing distance in the left-right direction from the first region AR1 in the fourth region. Note that, for example, in a country or a region where traffic on the left side is specified by law, the side farther from the ego-vehicle 100 is the right side of the oncoming vehicle 300, and the side closer to the ego-vehicle 100 is the left side of the oncoming vehicle 300. Therefore, in the case of a country or a region where traffic is on the left side, in the light distribution pattern P3 illustrated in FIG. 8, for example, the right-side region BA4 is the third region AR3, and the left-side region BA3 is the fourth region AR4. Thus, in a country or a region where traffic is on the left side, for example, in a case where the other vehicle is the oncoming vehicle 300, the width WF4 in the left-right direction of the right-side region BA4 may be greater than the width WF3 in the left-right direction of the left-side region BA3. When an oncoming vehicle 300 is approaching, a region overlapping the visual recognition part of the oncoming vehicle 300 in the light distribution pattern rapidly spreads to the side farther from the ego-vehicle 100 than the side closer to the ego-vehicle 100. That is, in a country or a region where traffic is on the left side, in a case where the other vehicle is the oncoming vehicle 300, the third region AR3 in the second region AR2 is more likely to overlap the visual recognition part of the oncoming vehicle 300 than the fourth region AR4 in the second region AR2. Therefore, as described above, the width WF4 in the left-right direction of the right-side region BA4 is made greater than the width WF3 in the left-right direction of the left-side region BA3. With such a configuration, even in a case where the oncoming vehicle 300 approaches and where a region overlapping the visual recognition part of the oncoming vehicle 300 in the light distribution pattern rapidly spreads to the right side and the second region AR2 overlaps the visual recognition part of the oncoming vehicle 300, the visual recognition part of the oncoming vehicle 300 can be prevented from being suddenly brightly irradiated by interposing the right-side region BA4 where gradation is formed. Thus, it is possible to suppress dazzling of an oncoming vehicle 300 more effectively when performing ADB control.

As described above, according to the present invention, a vehicle headlight capable of suppressing dazzling of other vehicles when performing ADB control is provided, and can be used in the field of automobiles and the like.

## Claims

1. A vehicle headlight (1), comprising:
a light source unit (10) for forming a light distribution pattern which can be changed by light beams emitted from a light source group (130) of the light source unit (10); and
a control unit (CO),
wherein, in a case where a detection signal of another vehicle (200, 300) present in front of an ego-vehicle (100) is inputted from a detection unit (29) for detecting the other vehicle, the control unit causes first light sources of the light source group (130), which emit light toward a first region (AR1) including a region overlapping a visual recognition part (201, 202, 301) of the other vehicle used by a driver thereof to visually recognize the outside of the other vehicle (200, 300), to emit light having a lower intensity than in a case where no detection signal is inputted, and causes, among second light sources of the light source group (130) that emit light toward a second region (AR2) surrounding the first region (AR1), the second light sources which emit light toward a lower-side region (BA1) lower than the first region, to emit light with an increasingly lower intensity toward the side closer to the first region (AR1); and **characterized in that**
in a case where the ego-vehicle (100) is tilted such that the front side of the ego-vehicle is higher than the rear side, the control unit (CO) increases a width in an up-down direction of the lower region (BA1) as the tilt of the ego-vehicle increases.

2. The vehicle headlight according to claim 1,
wherein, in a case where the detection signal is inputted from the detection unit (29), the control unit (CO) causes, among the second light sources, the second light source which emits light toward an upper-side region (BA2) above the first region (AR1) to emit light with an increasingly lower intensity toward the side closer to the first region (AR1).

3. The vehicle headlight according to claim 2,
wherein, in a case where the ego-vehicle (100) is tilted such that the rear side of the ego-vehicle is higher than the front side, the control unit (CO) increases the width in the up-down direction of the upper-side region (BA2) as the tilt of the ego-vehicle (100) increases.

4. The vehicle headlight according to any one of claims 1 to 3,
wherein, in a case where the detection signal is inputted from the detection unit (29), the control unit (CO) causes at least one second light source of: a second light source that emits light toward a left-side region (BA3) on a left side of the first region among the second light sources, and a second light source that emits light toward a right-side region (BA4) on a right side of the first region (AR1) among the second light sources, to emit light with an increasingly lower intensity toward the side closer to the first region (AR1).

5. The vehicle headlight according to claim 4,
wherein at least one of a width in a left-right direction of the left-side region (BA3) and a width in the left-right direction of the right-side region (BA4) is smaller than a width in the up-down direction of the lower side region (BA1).

6. The vehicle headlight according to claim 4 or 5,
wherein a width (WF4, WF3) in the left-right direction in a third region (AR3), which is the region farther from the ego-vehicle (100) out of the left-side region (BA3) and the right-side region (BA4) in a case where the other vehicle is an oncoming vehicle (300), is greater than a width (WF3, WF4) in the left-right direction in a fourth region (AR4), which is the region closer to the ego-vehicle (100) out of the left-side region (BA3) and the right-side region (BA4) in a case where the other vehicle is an oncoming vehicle (300).

## Patentansprüche

1. Scheinwerfer für Fahrzeuge (1), umfassend:
eine Lichtquelleneinheit (10) zur Bildung eines Lichtverteilungsmusters, das durch von einer Lichtquellengruppe (130) der Lichtquelleneinheit (10) emittierte Lichtstrahlen verändert werden kann; und
eine Steuereinheit (CO),
wobei in einem Fall, in dem ein Detektionssignal eines anderen Fahrzeugs (200, 300), das sich vor einem Ego-Fahrzeug (100) befindet, von einer Detektionseinheit (29) zum Detektieren des anderen Fahrzeugs eingegeben wird, die Steuereinheit veranlasst, dass erste Lichtquellen der Lichtquellengruppe (130), die Licht in Richtung eines ersten Bereichs (AR1) emittieren, der einen Bereich einschließt, der einen visuellen Erkennungsteil (201, 202, 301) des anderen Fahrzeugs überlappt, der von einem Fahrer desselben verwendet wird, um die Außenseite des anderen Fahrzeugs (200, 300) visuell zu erkennen, um Licht mit einer geringeren Intensität zu emittieren als in einem Fall, in dem kein Detektionssignal eingegeben wird, und veranlasst, dass unter zweiten Lichtquellen der Lichtquellengruppe (130), die Licht in Richtung eines zweiten Bereichs (AR2), der den ersten Bereich (AR1) umgibt, emittieren, die zweiten Lichtquellen, die Licht in Richtung eines Unterseitenbereichs (BA1), der niedriger als der erste Bereich ist, emittieren, Licht mit einer zunehmend geringeren Intensität in Richtung der Seite, die näher an dem ersten Bereich (AR1) liegt, emittieren; und **dadurch gekennzeichnet, dass**
in einem Fall, in dem das Ego-Fahrzeug (100) so geneigt ist, dass die Vorderseite des Ego-Fahrzeugs höher ist als die Rückseite, die Steuereinheit (CO) eine Breite in einer Auf-Ab-Richtung des unteren Bereichs (BA1) vergrößert, wenn die Neigung des Ego-Fahrzeugs zunimmt.

2. Scheinwerfer für Fahrzeuge nach Anspruch 1,
wobei in einem Fall, in dem das Detektionssignal von der Detektionseinheit (29) eingegeben wird, die Steuereinheit (CO) veranlasst, dass unter den zweiten Lichtquellen die zweite Lichtquelle, die Licht in Richtung eines Oberseitenbereichs (BA2) oberhalb des ersten Bereichs (AR1) emittiert, Licht mit einer zunehmend geringeren Intensität in Richtung der Seite emittiert, die näher an dem ersten Bereich (AR1) liegt.

3. Scheinwerfer für Fahrzeuge nach Anspruch 2,
wobei in einem Fall, in dem das Ego-Fahrzeug (100) so geneigt ist, dass die Rückseite des Ego-Fahrzeugs höher ist als die Vorderseite, die Steuereinheit (CO) die Breite in der Auf-Ab-Richtung des Oberseitenbereichs (BA2) vergrößert, wenn die Neigung des Ego-Fahrzeugs (100) zunimmt.

4. Scheinwerfer für Fahrzeuge nach einem der Ansprüche 1 bis 3,
wobei in einem Fall, in dem das Detektionssignal von der Detektionseinheit (29) eingegeben wird, die Steuereinheit (CO) veranlasst, dass mindestens eine zweite Lichtquelle von: einer zweiten Lichtquelle, die Licht in Richtung eines Linksseitenbereichs (BA3) auf einer linken Seite des ersten Bereichs emittiert, unter den zweiten Lichtquellen, und einer zweiten Lichtquelle, die Licht in Richtung eines Rechtsseitenbereichs (BA4) auf einer rechten Seite des ersten Bereichs (AR1) emittiert, unter den zweiten Lichtquellen, Licht mit einer zunehmend geringeren Intensität in Richtung der Seite, die näher an dem ersten Bereich (AR1) liegt, emittiert.

5. Scheinwerfer für Fahrzeuge nach Anspruch 4,
wobei mindestens eine von einer Breite in einer Links-Rechts-Richtung des Linksseitenbereichs (BA3) und einer Breite in der Links-Rechts-Richtung des Rechtsseitenbereichs (BA4) kleiner ist als eine Breite in der Auf-Ab-Richtung des Unterseitenbereichs (BA1).

6. Scheinwerfer für Fahrzeuge nach Anspruch 4 oder 5,
wobei eine Breite (WF4, WF3) in der Links-Rechts-Richtung in einem dritten Bereich (AR3), der in einem Fall, in dem das andere Fahrzeug ein entgegenkommendes Fahrzeug (300) ist, der von dem Ego-Fahrzeug (100) weiter entfernte Bereich aus dem Linksseitenbereich (BA3) und dem Rechtsseitenbereich (BA4) ist, größer ist als eine Breite (WF3, WF4) in der Links-Rechts-Richtung in einem vierten Bereich (AR4), der der Bereich aus dem Linksseitenbereich (BA3) und dem Rechtsseitenbereich (BA4) ist, der näher an dem Ego-Fahrzeug (100) liegt, in einem Fall, in dem das andere Fahrzeug ein entgegenkommendes Fahrzeug (300) ist.

## Revendications

1. Phare de véhicule (1), comprenant :
une unité de source lumineuse (10) destinée à former un schéma de distribution lumineuse qui peut être modifié par des faisceaux lumineux émis à partir d'un groupe de sources lumineuses (130) de l'unité de source lumineuse (10) ; et
une unité de commande (CO),
dans lequel, dans un cas où un signal de détection d'un autre véhicule (200, 300) présent devant un véhicule ego (100) est entré à partir d'une unité de détection (29) pour détecter l'autre véhicule, l'unité de commande amène des premières sources lumineuses du groupe de sources lumineuses (130), lesquelles émettent la lumière vers une première région (AR1) incluant une région qui chevauche une partie de reconnaissance visuelle (201, 202, 301) de l'autre véhicule utilisée par un conducteur de celui-ci, pour reconnaître visuellement l'extérieur de l'autre véhicule (200, 300), à émettre une lumière ayant une intensité plus faible que dans le cas où aucun signal de détection n'est entré, et amène des secondes sources lumineuses qui, parmi des secondes sources lumineuses du groupe de sources lumineuses (130) qui émettent la lumière vers une deuxième région (AR2) qui entoure la première région (AR1), émettent la lumière vers une région côté inférieur (BA1) qui est plus basse que la première région à émettre une lumière ayant une intensité de plus en plus faible vers le côté plus proche de la première région (AR1) ; et **caractérisé en ce que**
dans un cas où le véhicule ego (100) est incliné de telle sorte que le côté avant du véhicule ego soit plus élevé que le côté arrière, l'unité de commande (CO) augmente une largeur dans une direction haut-bas de la région inférieure (BA1) lorsque l'inclinaison du véhicule ego augmente.

2. Phare de véhicule selon la revendication 1,
dans lequel, dans un cas où le signal de détection est entré à partir de l'unité de détection (29), l'unité de commande (CO) amène, parmi les secondes sources lumineuses, la seconde source lumineuse qui émet la lumière vers une région côté supérieur (BA2) au-dessus de la première région (AR1) à émettre une lumière avec une intensité de plus en plus faible vers le côté plus proche de la première région (AR1).

3. Phare de véhicule selon la revendication 2,
dans lequel, dans un cas où le véhicule ego (100) est incliné de telle sorte que le côté arrière du véhicule ego soit plus élevé que le côté avant, l'unité de commande (CO) augmente la largeur dans la direction haut-bas de la région côté supérieur (BA2) lorsque l'inclinaison du véhicule ego (100) augmente.

4. Phare de véhicule selon l'une quelconque des revendications 1 à 3,
dans lequel, dans un cas où le signal de détection est entré à partir de l'unité de détection (29), l'unité de commande (CO) amène au moins une seconde source lumineuse parmi : une seconde source lumineuse qui émet la lumière vers une région côté gauche (BA3) sur un côté gauche de la première région parmi les secondes sources lumineuses, et une seconde source lumineuse qui émet la lumière vers une région côté droit (BA4) sur un côté droit de la première région (AR1) parmi les secondes sources lumineuses, à émettre une lumière avec une intensité de plus en plus faible vers le côté plus proche de la première région (AR1).

5. Phare de véhicule selon la revendication 4,
dans lequel au moins une largeur parmi une largeur dans une direction gauche-droite de la région côté gauche (BA3) et une largeur dans la direction gauche-droite de la région côté droit (BA4) est plus petite qu'une largeur dans la direction haut-bas de la région côté inférieur (BA1).

6. Phare de véhicule selon la revendication 4 ou la revendication 5,
dans lequel une largeur (WF4, WF3) dans la direction gauche-droite dans une troisième région (AR3), qui est la région plus éloignée du véhicule ego (100) parmi la région côté gauche (BA3) et la région côté droit (BA4) dans le cas où l'autre véhicule est un véhicule arrivant en sens inverse (300), est plus grande qu'une largeur (WF3, WF4) dans la direction gauche-droite dans une quatrième région (AR4), qui est la région plus proche du véhicule ego (100) parmi la région côté gauche (BA3) et la région côté droit (BA4) dans un cas où l'autre véhicule est un véhicule arrivant en sens inverse (300).
